# EUROPEAN PATENT APPLICATION

(11) **EP 4 557 488 A1**
(43) Date of publication of application: **21.05.2025**
(21) Application number: 22951490.6
(22) Date of filing: 20.07.2022
(51) Int. Cl.: H01M 50/383, H01M 10/48, H01M 50/358, H01M 10/613, H01M 10/63

(54) **BATTERY AND ELECTRIC DEVICE**

(71) Applicant: Contemporary Amperex Technology Co., Limited, Ningde, Fujian 352100 (CN)
(72) Inventor: CHEN, Xiaobo, Ningde, Fujian 352100 (CN); HU, Lu, Ningde, Fujian 352100 (CN); CHAI, Jing, Ningde, Fujian 352100 (CN)
(74) Representative: Gong, Jinping
(86) International application number: PCT/CN2022/106729
(87) International publication number: WO 2024/016212

(57) **Abstract**

Embodiments of the present application provide a battery and an electrical device, belonging to the field of battery technologies. The battery includes a box, and a battery cell and a treatment device accommodated in the box. The treatment device is used for treating exhaust gases discharged from the battery cell into the box, so as to adjust a concentration of a preset gas in the exhaust gases to below a corresponding preset value, where the preset gas is one or a mixture of combustible gases. The treatment device can treat the exhaust gases discharged into the box when the battery cell undergoes thermal runaway, thereby reducing the concentration of one or a mixture of combustible gases in the exhaust gases to below the preset value, reducing flammability levels of the combustible gases, reducing risks of combustion and explosion of the battery, and effectively improving the safety of the battery.

## Description

### Technical Field

The present application relates to the field of battery technologies, and in particular, to a battery and an electrical device.

### Background Art

With the development of new energy technologies, batteries are increasingly widely used, such as in mobile phones, notebook computers, scooters, electric vehicles, electric airplanes, electric ships, electric toy cars, electric toy ships, electric toy planes, and electric tools.

In battery technologies, performance and safety of batteries are required to be considered. Therefore, how to improve the safety of batteries is an urgent problem to be solved in the battery technologies.

### Summary

Embodiments of the present application provide a battery and an electrical device to effectively improve the safety of the battery.

In a first aspect, an embodiment of the present application provides a battery, including a box body, and a battery cell and a treatment device accommodated in the box, where the treatment device is used for treating exhaust gases discharged from the battery cell into the box, so as to adjust a concentration of a preset gas in the exhaust gases to below a corresponding preset value, where the preset gas is one or a mixture of combustible gases.

In the foregoing technical solution, the treatment device is disposed inside the box, and the treatment device can treat the exhaust gases discharged into the box when the battery cell undergoes thermal runaway, thereby reducing the concentration of one or a mixture of combustible gases in the exhaust gases to below the preset value, reducing flammability levels of the combustible gases, reducing risks of combustion and explosion of the battery, and effectively improving the safety of the battery.

In some embodiments, the preset gas is electrolyte vapor, and the preset value is 3.6%. The treatment device adjusts the concentration of the electrolyte vapor to below 3.6%, so that the concentration of the electrolyte vapor is below a lower limit of combustion, the risk of combustion of the electrolyte vapor is reduced, and the safety of the battery is improved.

In some embodiments, the preset gas is a mixed combustible gas of H₂, CO, and alkanes, and the preset value is 7.6%. The treatment device adjusts the concentration of the mixed combustible gas of H₂, CO, and alkanes to below 7.6%, so that the concentration of the mixed combustible gas of H₂, CO, and alkanes is below the lower limit of combustion, the risk of combustion of the mixed combustible gas of H₂, CO, and alkanes is reduced, and the safety of the battery is improved.

In some embodiments, the preset gas includes all combustible gases in the exhaust gases, and the preset value is 8.3%. The treatment device adjusts the concentration of all the mixed combustible gases in the exhaust gases to below 8.3% to reduce the risk of combustion of the exhaust gases and improve the safety of the battery.

In some embodiments, the battery further includes a detection unit and a control unit; the detection unit is disposed inside the box, and the detection unit is used for detecting the concentration of the preset gas; and the control unit is electrically connected to the detection unit and the treatment device, and the control unit is used for controlling the treatment device to release a treatment medium when the concentration of the preset gas in the exhaust gases is higher than the corresponding preset value. When the detection unit detects that the preset gas is higher than the corresponding preset value, the control unit controls the treatment device to release the treatment medium, so as to adjust the concentration of the preset gas to below the corresponding preset value and achieve automatic control on the treatment device.

In some embodiments, the treatment device includes a receiving component and a switching unit; an accommodating space is formed in the receiving component, and the accommodating space is used for accommodating the treatment medium; and the switching unit is electrically connected to the control unit, and the control unit is used for controlling the switching unit to open when the concentration of the preset gas is higher than the corresponding preset value to release the treatment medium. The control unit controls the switching unit to open to release the treatment medium accommodated in the receiving component, so as to treat the exhaust gases inside the box. The overall structure of the treatment device is simple.

In some embodiments, the battery further includes a pressure relief mechanism disposed on the box, where the pressure relief mechanism is electrically connected to the control unit; and the control unit is used for controlling the pressure relief mechanism to actuate when the concentration of the preset gas is lower than the corresponding preset value, so as to release pressure inside the box. The pressure relief mechanism disposed on the box can be automatically controlled by the control unit. When the treatment device releases the treatment medium to adjust the concentration of the preset gas to below the corresponding preset value, the control unit will control the pressure relief mechanism to actuate, thereby discharging the exhaust gases that meet discharge requirements inside the box to the outside of the box, to reduce the pressure inside the box.

In some embodiments, the battery further includes a pressure relief mechanism, and the pressure relief mechanism is used for releasing pressure inside the box after actuated; and the box includes a first space and a second space that are separated, the first space is used for accommodating the battery cell, the second space is used for accommodating the exhaust gases, and the pressure relief mechanism is configured to connect the outside of the box and the second space after actuated. The first space and the second space separated from each other in the box are used for accommodating the battery cell and discharging the exhaust gases respectively, so that the battery cell and the exhaust gases are separated from each other to reduce the impact of the exhaust gases on the battery cell and further improve the safety.

In some embodiments, the battery cell has a pressure relief portion, and the pressure relief portion is provided facing the second space. In this case, the exhaust gases discharged when the battery cell undergoes thermal runaway can enter the second space more easily.

In some embodiments, the first space and the second space are separated by a separating member, the separating member is provided with a channel, and the channel connects the first space and the second space. In this case, the first space and the second space are in a connected state, and the exhaust gases discharged when the battery cell undergoes thermal runaway can enter the second space through the channel.

In some embodiments, the battery cell has a pressure relief portion, and the pressure relief portion is located at one end of the channel in a run-through direction and faces the channel. In this case, the exhaust gases discharged when the battery cell undergoes thermal runaway can directly enter the channel, so that the exhaust gases enter the second space faster.

In some embodiments, the treatment device includes the separating member, the separating member is provided with an inner cavity, the inner cavity is used for accommodating the treatment medium, a side wall of the channel is provided with a switching portion, and the switching portion is configured to allow the treatment medium in the inner cavity to flow out via the switching portion when opened. The separating member serves as a separating component for separating the first space and the second space, and as a treatment component for providing the treatment medium. When the exhaust gases enter the second space via the channel, the treatment medium in the inner cavity can be released via the switching portion, so as to reduce the concentration of the preset gas in the exhaust gases faster.

In some embodiments, the switching portion is a nozzle, and a spraying direction of the nozzle intersects with the run-through direction of the channel. In this case, the treatment medium sprayed out from the nozzle can be more fully mixed with the exhaust gases, the treatment effect on the exhaust gases is better, and the concentration of the preset gas in the exhaust gases can be reduced faster.

In some embodiments, the first space and the second space are separated by the separating member, the separating member is provided with a switching mechanism, and the switching mechanism is configured to connect or disconnect the first space and the second space. The switching mechanism disposed on the separating member can connect or disconnect the first space and the second space. In a normal working environment, the switching mechanism may be in a closed state, so that the first space and the second space are independent of each other. When the battery cell undergoes thermal runaway, the switching mechanism may be in an open state, so that the first space and the second space are connected to each other, and the exhaust gases can enter the second space from the first space.

In some embodiments, the switching mechanism is a weak portion, and the weak portion is configured to connect the first space and the second space after being damaged by the exhaust gases. The switching mechanism with this structure can be passively opened under the action of the exhaust gases, with a simple structure and good economic efficiency.

In some embodiments, the treatment device is disposed in the second space. After the exhaust gases enter the second space, the treatment device can treat the exhaust gases in the second space, so as to reduce the concentration of the preset gas in the exhaust gases.

In some embodiments, the battery cell has a pressure relief portion; and the treatment device includes a support member, the support member is used for supporting the battery cell, an avoidance cavity is disposed on a side, facing the battery cell, of the support member, the avoidance cavity is used for avoiding the pressure relief portion, and the avoidance cavity accommodates the treatment medium. In this case, the exhaust gases discharged from the pressure relief portion can directly flow to the treatment medium, whereby the concentration of the preset gas in the exhaust gases is quickly reduced through the treatment medium.

In some embodiments, the battery cell has a pressure relief portion; the treatment device includes a support member, the support member is used for supporting the battery cell, an avoidance cavity is disposed on a side, facing the battery cell, of the support member, and the avoidance cavity is used for avoiding the pressure relief portion; and a trigger mechanism is disposed in the avoidance cavity, an accommodating cavity is disposed inside the support member, the accommodating cavity is used for accommodating the treatment medium, and the trigger mechanism is configured to allow the treatment medium in the accommodating cavity to be discharged via the trigger mechanism after triggered. When the battery cell undergoes thermal runaway, the exhaust gases inside the battery cell will be discharged into the avoidance cavity through the pressure relief portion. Because the trigger mechanism is provided with the avoidance cavity, the treatment medium discharged via the trigger mechanism can be fully mixed with the exhaust gases in the avoidance cavity after the trigger mechanism is triggered, thereby quickly reducing the concentration of the preset gas in the exhaust gases.

In some embodiments, the trigger mechanism is configured to be triggered by the exhaust gases. In the normal working environment, the trigger mechanism is not triggered, and the treatment medium accommodated in the accommodating cavity will not be discharged. When the battery cell undergoes thermal runaway, the trigger mechanism can be triggered by the exhaust gases discharged by the battery cell, so that the treatment medium is discharged in a timely manner to reduce the concentration of the preset gas in the exhaust gases.

In some embodiments, the support member is configured as a thermal management component. The support member has abilities to manage the temperature of the battery cell and reduce the concentration of the preset gas in the exhaust gases.

In a second aspect, an embodiment of the present application further provides an electrical device, including at least one battery provided by any of the embodiments of the first aspect.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided by some embodiments of the present application;
FIG. 2 is an exploded view of a battery provided by some embodiments of the present application;
FIG. 3 is a schematic structural diagram of a battery shown in FIG. 2;
FIG. 4 is a control schematic diagram of a treatment device provided by an embodiment of the present application;
FIG. 5 is a schematic structural diagram of a box shown in FIG. 4;
FIG. 6 is a schematic structural diagram of a battery provided by other embodiments of the present application;
FIG. 7 is a partially enlarged view of part A of the battery shown in FIG. 6;
FIG. 8 is a schematic structural diagram of a battery provided by still other embodiments of the present application;
FIG. 9 is a schematic structural diagram of a battery provided by further embodiments of the present application;
FIG. 10 is an exploded view of a battery cell and a support member provided by some embodiments of the present application; and
FIG. 11 is a schematic structural diagram of the support member shown in FIG. 10.

Reference numerals: 10 - box; 11 - first part; 12 - second part; 13 - first space; 14 - second space; 15 - separating member; 151 - channel; 152 - inner cavity; 153 - switching portion; 154 - switching mechanism; 20 - battery cell; 21 - pressure relief portion; 30 - treatment device; 31 - receiving component; 311 - accommodating space; 32 - switching unit; 33 - support member; 331 - avoidance cavity; 332 - trigger mechanism; 40 - current collecting component; 50 - detection unit; 60 - control unit; 70 - pressure relief mechanism; 100 - battery; 200 - controller; 300 - motor; 1000 - vehicle; X - spraying direction; Y - run-through direction.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or an internal communication between two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cells.

The battery cell includes an electrode assembly and an electrolytic solution, where the electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive electrode tab. In an example of a lithium-ion battery, a material of the positive electrode current collector may be aluminum, and a positive electrode active material may be lithium cobaltate, lithium iron phosphate, ternary lithium, lithium manganate, or the like. The negative electrode plate includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative electrode tab. A material of the negative electrode current collector may be copper, and a negative electrode active material may be carbon, silicon, or the like. In order to ensure that no fusing occurs when high current passes through, there is a plurality of positive electrode tabs laminated together, and there is a plurality of negative electrode tabs laminated together. A material of the separator may be polypropylene (PP), polyethylene (PE), or the like. Moreover, the electrode assembly may be of a wound structure or a laminated structure, and the embodiments of the present application are not limited thereto.

The development of battery technology needs to consider various design factors simultaneously, such as energy density, cycle life, discharge capacity, charge and discharge rate, and other performance parameters. In addition, safety of batteries should also be considered.

To improve the safety of the battery, a pressure relief mechanism is usually disposed on the box. When the battery cell in the box undergoes thermal runaway, pressure inside the box is released through the pressure relief mechanism, thereby improving the safety of the battery.

The inventor noticed that in the battery, after the thermal runaway of the battery cell, the battery cell discharges exhaust gases, and the exhaust gases inside the box are ultimately discharged to the outside of the box through the pressure relief mechanism, where the exhaust gases discharged to the outside of the box contain a lot of combustible gases, such as H₂, CO, alkanes, or electrolyte vapor. These combustible gases require little ignition capability and are very easy to ignite by fine ignition sources in the presence of combustion aids (such as oxygen), so intense combustion and even battery explosion are caused and safety accidents occur.

Based on the above considerations, in order to improve the safety of the battery, the inventor conducted in-depth researches and designed a battery. A treatment device is disposed inside a box to treat exhaust gases discharged from battery cell into the box, so to adjust a concentration of a preset gas in the exhaust gases to below a corresponding preset value, where the preset gas is one or a mixture of combustible gases.

In such a battery, the treatment device can treat the exhaust gases discharged into the box when the battery cell undergoes thermal runaway, thereby reducing the concentration of one or a mixture of combustible gases in the exhaust gases to below the preset value, reducing flammability levels of the combustible gases, reducing risks of combustion and explosion of the battery, and effectively improving the safety of the battery.

The battery described in the embodiments of the present application is suitable for an electrical device using the battery.

The electrical device may be a vehicle, a mobile phone, a portable device, a notebook computer, a ship, a spacecraft, an electric toy, an electric tool, or the like. The vehicle may be an oil-fueled vehicle, a gas vehicle, or a new energy vehicle. The new energy vehicle may be a battery electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not limit the foregoing electrical devices.

For convenient description, the following embodiments are described by an example of a vehicle as an electrical device.

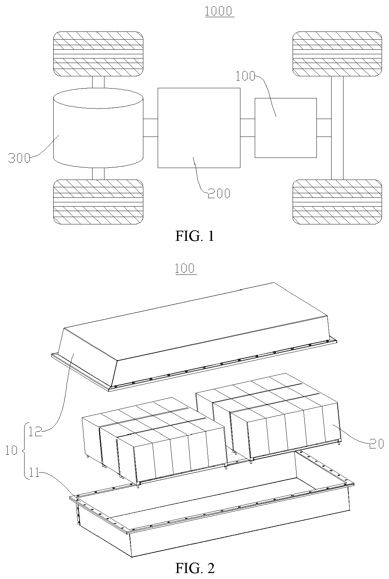

Referring to FIG. 1, FIG. 1 is a schematic structural diagram of a vehicle 1000 provided by some embodiments of the present application. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000.

The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

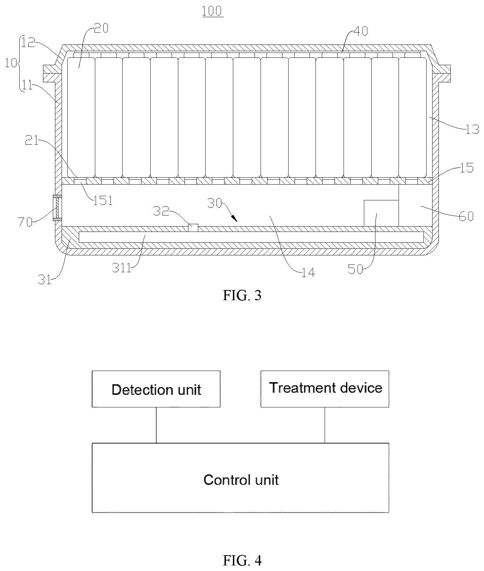

Referring to FIG. 2 and FIG. 3, FIG. 2 is an exploded view of a battery 100 provided by some embodiments of the present application; and FIG. 3 is a schematic structural diagram of the battery 100 shown in FIG. 2. The battery 100 includes a box 10, a battery cell 20, and a treatment device 30, where the battery cell 20 and the treatment device 30 are accommodated in the box 10, and the treatment device 30 is used for treating exhaust gases discharged from the battery cell 20 into the box 10, so as to adjust a concentration of a preset gas in the exhaust gases to below a corresponding preset value, where the preset gas is one or a mixture of combustible gases.

The box 10 is a component for storing the battery cell 20, the box 10 provides a storage space for the battery cell 20, and the box 10 may have various structures. For example, the box 10 may include a first part 11 and a second part 12, and the first part 11 and the second part 12 are closed to each other to jointly confine the storage space for accommodating the battery cell 20. The first part 11 and the second part 12 may be in various shapes, such as cuboids or cylinders. The first part 11 may be of a hollow structure with an open side, the second part 12 may also be of a hollow structure with an open side, and the open side of the second part 12 is closed to the open side of the first part 11 to form the box 10 with the storage space. Alternatively, the first part 11 is of a hollow structure with an open side, the second part 12 is of a plate-like structure, and the second part 12 is closed to the open side of the first part 11 to form the box 10 with the storage space. The first part 11 and the second part 12 may be sealed by a sealing element, which may be a sealing ring, a sealant, or the like.

The battery cell 20 may be an energy storage unit that undergoes electrochemical reactions through an electrode assembly and an electrolytic solution to output electrical energy.

There may be one or more battery cells 20 in the box 10. If there is a plurality of battery cells 20, the plurality of battery cells 20 may be in series connection, parallel connection, or series-parallel connection. The series-parallel connection refers to a combination of series connection and parallel connection in the plurality of battery cells 20. The plurality of battery cells 20 may first be connected in series, in parallel, or in series and parallel to form a battery module, and then a plurality of battery modules may be connected in series, in parallel, or in series and parallel to form a whole accommodated in the box 10. Alternatively, all the battery cells 20 may be directly connected in series, in parallel, or in series and parallel together, and then the whole formed by all the battery cells 20 is accommodated in the box 10.

The battery 100 may further include a current collecting component 40, and the plurality of battery cells 20 may be electrically connected through the current collecting component 40 to implement the parallel, series, or series-parallel connection of the plurality of battery cells 20. The current collecting component 40 may be a metal conductor, such as copper, iron, aluminum, stainless steel, or aluminum alloy.

The treatment device 30 is a component used for reducing concentrations of preset gases in the exhaust gases. The treatment device 30 may treat the exhaust gases in various ways to reduce the concentrations of the preset gases. For example, the treatment device 30 provides a treatment medium to reduce the concentrations of the preset gases. The treatment medium may be a solid medium, a liquid medium, or a gas medium. The treatment medium may be at least one of a phase change material, an oxidant, a mixture of an oxidant and a catalyst, ultra-pure water, fluorinated liquid, or water-cooled liquid. The oxidant may be at least one of copper oxide, sodium peroxide, potassium permanganate, or the like, and the catalyst may be at least one of precious metal catalysts, such as palladium, platinum, or rhodium. For example, when the treatment medium is a solid phase change material and the temperature inside the box 10 increases due to thermal runaway of the battery cell 20, the phase change material changes from a solid state to a non-combustible liquid or gas medium to reduce the concentration of the preset gas. For example, the treatment medium is an oxidant, which chemically reacts with the preset gas to reduce the concentration of the preset gas.

The exhaust gases refer to gases discharged from the inside of the battery cell 20 when the battery cell 20 undergoes thermal runaway. The exhaust gases include combustible gases and non-combustible gases; the combustible gases include at least one of H₂, CO, alkanes, electrolyte vapor, and the like; and the non-combustible gases include at least one of CO₂, N₂, and the like. The alkanes include at least one of CH₄, C₂H₄, and C₃H₈. The preset gas is one or a mixture of combustible gases in the exhaust gases. For example, the combustible gases in the exhaust gases are H₂, CO, alkanes, and electrolyte vapor. The treatment device 30 may adjust the concentration of any combustible gas among the H₂, CO, alkanes, and electrolyte vapor to a corresponding preset value, for example, adjust the concentration of hydrogen to be 4% or less to greatly reduce the risk of combustion after the combustible gas is discharged, or adjust the concentration of mixed combustible gases among the H₂, CO, alkanes, and electrolyte vapor to a corresponding preset value to reduce a probability of fire in the battery.

The preset value may be a lower limit of combustion of the preset gas, and a minimum concentration that can propagate flame is called the lower limit of combustion of the preset gas. For example, the preset gas is electrolyte vapor, and the treatment device 30 can reduce the concentration of the electrolyte vapor to below the lower limit of combustion. For example, the preset gas is a mixed gas of H₂, CO, and alkanes, and the treatment device 30 can reduce the concentration of the mixed gas of H₂, CO, and alkanes to below the lower limit of combustion.

In the embodiments of the present application, the treatment device 30 is disposed inside the box 10, and the treatment device 30 can treat the exhaust gases discharged into the box 10 when the battery cell 20 undergoes thermal runaway, thereby reducing the concentration of one or a mixture of combustible gases in the exhaust gases to below the preset value, reducing flammability levels of the combustible gases, reducing risks of combustion and explosion of the battery 100, and effectively improving the safety of the battery cell 20.

In some embodiments, the preset gas is electrolyte vapor, and the preset value is 3.6%.

The treatment device 30 can treat the electrolyte vapor in the exhaust gases to reduce the concentration of the electrolyte vapor. For example, the treatment device 30 reduces the concentration of the electrolyte vapor in the exhaust gases to 1.2% to 3.6%.

In this embodiment, the treatment device 30 adjusts the concentration of the electrolyte vapor to below 3.6% (including 3.6%), so that the concentration of the electrolyte vapor is below the lower limit of combustion, the risk of combustion of the electrolyte vapor is reduced, and the safety of the battery cell 20 is improved.

In some embodiments, the preset gas is a mixed combustible gas of H₂, CO, and alkanes, and the preset value is 7.6%.

The treatment device 30 can treat the mixed combustible gas of H₂, CO, and alkanes in the exhaust gases to reduce the concentration of the mixed combustible gas of H₂, CO, and alkanes. For example, the treatment device 30 reduces the concentration of the mixed combustible gas of H₂, CO, and alkanes in the exhaust gases to 4.4% to 7.6%.

The treatment device 30 adjusts the concentration of the mixed combustible gas of H₂, CO, and alkanes to below 7.6% (including 7.6%), so that the concentration of the mixed combustible gas of H₂, CO, and alkanes is below the lower limit of combustion, the risk of combustion of the mixed combustible gas of H₂, CO, and alkanes is reduced, and the safety of the battery cell 20 is improved.

In some embodiments, the preset gas includes all combustible gases in the exhaust gases, and the preset value is 8.3%.

For example, the combustible gases in the exhaust gases are H₂, CO, alkanes, and electrolyte vapor, and the treatment device 30 can treat the mixed combustible gases of H₂, CO, alkanes, and electrolyte vapor to reduce the concentration of the mixed combustible gases of H₂, CO, alkanes, and electrolyte vapor.

For example, the treatment device 30 reduces the concentration of all the mixed combustible gases in the exhaust gases to 2% to 8.3%.

The treatment device 30 adjusts the concentration of all the mixed combustible gases in the exhaust gases to below 8.3% (including 8.3%) to reduce the risk of combustion of the exhaust gases and improve the safety of the battery cell 20.

In some embodiments, referring to FIG. 3 and FIG. 4, FIG. 4 is a control schematic diagram of the treatment device 30 provided by the embodiments of the present application. The battery 100 further includes a detection unit 50 and a control unit 60. The detection unit 50 is disposed inside the box 10, and the detection unit 50 is used for detecting the concentration of the preset gas. The control unit 60 is electrically connected to the detection unit 50 and the treatment device 30, and the control unit 60 is used for controlling the treatment device 30 to release the treatment medium when the concentration of the preset gas in the exhaust gases is higher than the corresponding preset value.

The detection unit 50 is a component that detects the concentration of the preset gas. The detection unit 50 may be a device with a concentration sensor, or a device with a photoelectric sensor, such as a Raman analyzer. The detection unit 50 is used for detecting the concentration of the preset gas. Of course, if the preset gas is a mixture of combustible gases, the detection unit 50 can detect the concentration of each combustible gas and obtain the concentration of the mixture of combustible gases by calculation and analysis.

The detection unit 50 is used for controlling the operation of the treatment device 30 according to the detection results of the detection unit 50, so that the treatment device 30 releases the treatment medium when the concentration of the preset gas is higher than the corresponding preset value, to reduce the concentration of the preset gas. For example, the preset gas includes all combustible gases in the exhaust gases and the preset value is 8.3%. When the detection unit 50 detects that the concentration of the mixture of all the combustible gases is higher than 8.3%, the control unit 60 will control the treatment device 30 to release the treatment medium.

The control unit 60 may be disposed inside the box 10 or outside the box 10. The control unit 60 may be a single chip microcomputer or a PLC (Programmable Logic Controller).

In this embodiment, when the detection unit 50 detects that the preset gas is higher than the corresponding preset value, the control unit 60 controls the treatment device 30 to release the treatment system, so as to adjust the concentration of the preset gas to below the corresponding preset value and achieve automatic control on the treatment device 30.

In some embodiments, with continued reference to FIG. 3, the treatment device 30 may include a receiving component 31 and a switching unit 32. An accommodating space 311 is formed inside the receiving component 31, and the accommodating space 311 is used for accommodating the treatment medium. The switching unit 32 is electrically connected to the control unit 60, and the control unit 60 is used for controlling the switching unit 32 to open when the concentration of the preset gas in the exhaust gases is higher than the corresponding preset value to release the treatment medium.

The receiving component 31 is a component that provides the treatment medium, the accommodating space 311 is formed therein, and the treatment medium is accommodated in the accommodating space 311. The receiving component 31 may be placed inside the box 10 or fixed inside the box 10.

The switching unit 32 is a component that connects or disconnects the inside of the box 10 and the accommodating space 311. The control unit 60 can control the switching unit 32 to open or close. When the switching unit 32 is opened, the inside of the box 10 is connected to the accommodating space 311. When the switching unit 32 is closed, the inside of the box 10 is disconnected from the accommodating space 311. The switching unit 32 may be an electronically controlled switching valve.

In this embodiment, the control unit 60 controls the switching unit 32 to open to release the treatment medium accommodated in the receiving component 31, so as to treat the exhaust gases inside the box 10. The overall structure of the treatment device 30 is simple.

In some embodiments, the battery 100 further includes a pressure relief mechanism 70, the pressure relief mechanism 70 is disposed on the box 10, and the pressure relief mechanism 70 is electrically connected to the control unit 60. The control unit 60 is used for controlling the pressure relief mechanism 70 to actuate when the concentration of the preset gas in the exhaust gases is lower than the corresponding preset value, so as to release the pressure inside the box 10. The pressure relief mechanism 70 disposed on the box 10 can be automatically controlled by the control unit 60.

The pressure relief mechanism 70 is a component used for releasing pressure inside the battery cell 20. The pressure relief mechanism 70 can be actuated under the control of the control unit 60, so that the exhaust gases inside the box 10 can be discharged to the outside of the box 10 through the pressure relief mechanism 70, to achieve the purpose of releasing the pressure inside the battery cell 20. The pressure relief mechanism 70 may be in a form of an explosion-proof valve, explosion-proof disc, air valve, pressure relief valve, or switching valve. The "actuated" mentioned in the present application indicates that the pressure relief mechanism 70 acts or is activated to a certain state, so that the internal pressure and temperature of the battery cell 20 are released. The action generated by the pressure relief mechanism 70 may include, but is not limited to: at least a portion of the pressure relief mechanism 70 is fractured, broken, torn, and the like. For example, the pressure relief mechanism 70 is a switching valve, and the control unit 60 can control the pressure relief mechanism 70 to open or close, so as to connect or disconnect the inside and outside of the box 10.

When the control unit 60 controls the pressure relief mechanism 70 to actuate, the control unit 60 can control the pressure relief mechanism 70 to be in a closed state, and the treatment device 30 will not release the treatment medium into the box 10 any more.

When the treatment device 30 releases the treatment medium to adjust the concentration of the preset gas to below the corresponding preset value, the control unit 60 will control the pressure relief mechanism 70 to actuate, thereby discharging the exhaust gases that meet discharge requirements inside the box 10 to the outside of the box 10, to reduce the pressure inside the box 10. Of course, because the concentration of the preset gas discharged to the outside of the box 10 is below the preset value, the preset gas is unlikely to burn, which ensures the safety of the battery 100.

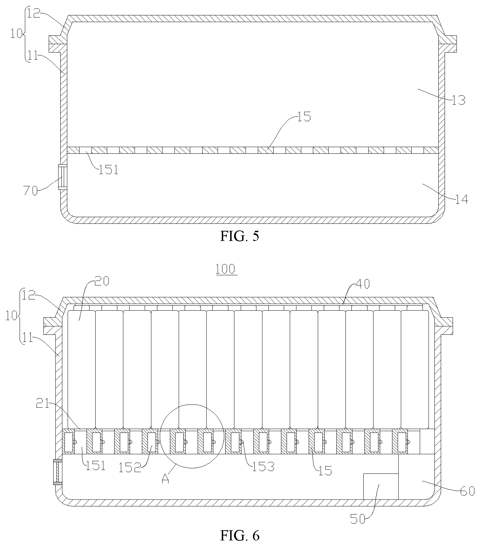

In some embodiments, referring to FIG. 5, FIG. 5 is a schematic structural diagram of the box 10 shown in FIG. 4. The battery 100 further includes a pressure relief mechanism 70, and the pressure relief mechanism 70 is used for releasing the pressure inside the box 10 after actuated. The box 10 includes a first space 13 and a second space 14 that are separated, the first space 13 is used for accommodating the battery cell 20, the second space 14 is used for accommodating the exhaust gases, and the pressure relief mechanism 70 is configured to connect the exterior of the box 10 and the second space 14 after actuated.

In this embodiment, the detection unit 50 and the control unit 60 may be disposed in the battery 100, or the detection unit 50 and the control unit 60 may not be disposed. If the detection unit 50 and the control unit 60 are disposed in the battery 100, the pressure relief mechanism 70 is actively actuated. If the detection unit 50 and the control unit 60 are not disposed in the battery 100, the pressure relief mechanism 70 is passively actuated. For example, when the internal pressure of the box 10 reaches a threshold, the pressure relief mechanism 70 is passively actuated to release the internal pressure of the box 10.

In an embodiment where the box 10 includes a first part 11 and a second part 12, the arrangement direction of the first space 13 and the second space 14 may be the same as that of the first part 11 and the second part 12, or the arrangement direction of the first space 13 and the second space 14 may be perpendicular to that of the first part 11 and the second part 12. For example, in FIG. 5, the arrangement direction of the first space 13 and the second space 14 may be the same as that of the first part 11 and the second part 12.

For example, the volume of the first space 13 is greater than that of the second space 14.

The first space 13 and the second space 14 separated from each other in the box 10 are used for accommodating the battery cell 20 and discharging the exhaust gases respectively, so that the battery cell 20 and the exhaust gases are separated from each other to reduce the impact of the exhaust gases on the battery cell 20 and further improve the safety.

In some embodiments, with continued reference to FIG. 3, the battery cell 20 has a pressure relief portion 21, and the pressure relief portion 21 faces the second space 14.

The pressure relief portion 21 is a component used for releasing the pressure inside the battery cell 20. When the battery cell 20 undergoes thermal runaway, the battery cell 20 will discharge exhaust gases outward through the pressure relief portion 21. The pressure relief portion 21 may be a weak area on a shell of the battery cell 20, or a pressure relief element disposed on the shell. The pressure relief element may be in a form of an explosion-proof valve, explosion-proof disc, air valve, pressure relief valve, or switching valve. The shell is a component of the battery cell 20 for accommodating the electrode assembly.

In this embodiment, the pressure relief portion 21 of the battery cell 20 faces the second space 14, so that the exhaust gases discharged when the battery cell 20 undergoes thermal runaway can enter the second space 14 more easily.

In some embodiments, with continued reference to FIG. 3 and FIG. 5, the first space 13 and the second space 14 are separated by a separating member 15, the separating member 15 is provided with a channel 151, and the channel 151 connects the first space 13 and the second space 14.

The separating member 15 is a member that separates the first space 13 and the second space 14. The separating member 15 may be of a flat plate structure fixed inside the box 10. In the embodiment where the box 10 includes a first part 11 and a second part 12, the first part 11 may be disposed at a bottom of the second part 12, the separating member 15 may be fixed inside the first part 11, and the pressure relief mechanism 70 may be disposed at the first part 11.

The channel 151 may correspond to the battery cell 20 one to one. The channel 151 may extend linearly or non-linearly, for example, the channel 151 extends along a bend line. For example, in FIG. 3 and FIG. 5, the channel 151 is a linear channel 151 extending along a thickness of the separating member 15, and the channel 151 runs through two surfaces of the separating member 15 along the thickness, so as to connect the first space 13 and the second space 14.

For example, the separating member 15 is used for supporting the battery cell 20, and the separating member 15 is configured as a thermal management component for managing the temperature of the battery cell 20.

In this embodiment, the first space 13 and the second space 14 are in a connected state, and the exhaust gases discharged when the battery cell 20 undergoes thermal runaway can enter the second space 14 through the channel 151.

In some embodiments, with continued reference to FIG. 3, the battery cell 20 has a pressure relief portion 21, and the pressure relief portion 21 is located at one end of the channel 151 in a run-through direction Y and faces the channel 151.

For example, the channel 151 is a linear channel 151 extending along the thickness of the separating member 15, and the run-through direction Y of the channel 151 is an extension direction of the channel 151, which may also be understood as the thickness direction of the separating member 15.

In this embodiment, the pressure relief portion 21 is disposed at one end of the channel 151 in the run-through direction Y and faces the channel 151, and the exhaust gases discharged when the battery cell 20 undergoes thermal runaway can directly enter the channel 151, so that the exhaust gases enter the second space 14 faster.

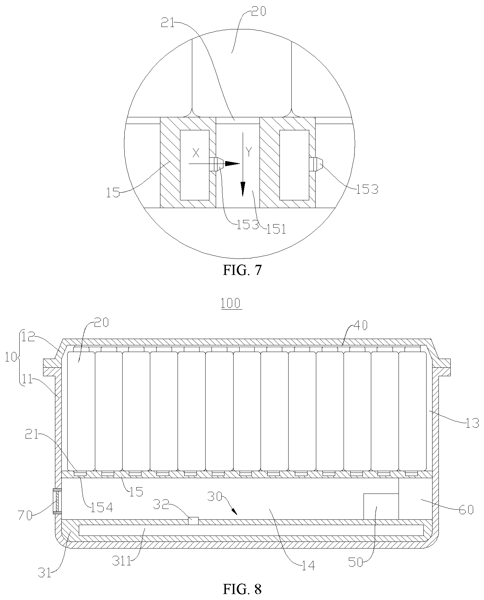

In some embodiments, referring to FIG. 6 and FIG. 7, FIG. 6 is a schematic structural diagram of a battery 100 provided by other embodiments of the present application, and FIG. 7 is a partially enlarged view of part A of the battery 100 shown in FIG. 6. The treatment device 30 includes the separating member 15, the separating member 15 is provided with an inner cavity 152, the inner cavity 152 is used for accommodating the treatment medium, a side wall of the channel 151 is provided with a switching portion 153, and the switching portion 153 is configured to allow the treatment medium in the inner cavity 152 to flow out via the switching portion 153 when opened.

The separating member 15 may be used as a portion of the treatment device 30. The separating member 15 serves as a separating component for separating the first space 13 and the second space 14, and as a treatment component for providing the treatment medium.

The inner cavity 152 is an internal space of the separating member 15, and is used for accommodating the treatment medium. There may be one or more inner cavities 152 inside the separating member 15. The inner cavity 152 and the channel 151 correspond one to one, that is, the treatment medium in one inner cavity 152 correspondingly flows into one channel 151. One inner cavity 152 may alternatively correspond to a plurality of channels 151, that is, the treatment medium in one inner cavity 152 correspondingly flows into the plurality of channels 151.

The switching portion 153 is a component used for connecting or disconnecting the inner cavity 152 and the channel 151. After the switching portion 153 is opened, the treatment medium in the inner cavity 152 flows out into the channel 151 via the switching portion 153.

In an embodiment where the treatment device 30 is controlled by the control unit 60 to release the treatment medium, the control unit 60 may be electrically connected to the switching portion 153, and the control unit 60 controls the switching portion 153 to open or close.

When the exhaust gases enter the second space 14 via the channel 151, the treatment medium in the inner cavity 152 can be released via the switching portion 153, so as to reduce the concentration of the preset gas in the exhaust gases faster.

In some embodiments, as shown in FIG. 7, the switching portion 153 is a nozzle, and a spraying direction X of the nozzle intersects with the run-through direction Y of the channel 151.

The spraying direction X of the nozzle and the run-through direction Y of the channel 151 are not parallel to each other, and the two may be at an angle. The run-through direction Y of the channel 151 is the same as a flow direction of the exhaust gases discharged by the battery cell 20 in the channel 151. In FIG. 7, the spraying direction X of the nozzle is perpendicular to the run-through direction Y of the channel 151.

For example, the nozzle is equipped with a switching valve, and the control unit 60 controls the switching valve to open or close the nozzle, so that the treatment medium in the inner cavity 152 can be sprayed out through the nozzle.

In this embodiment, the spraying direction X of the nozzle intersects with the run-through direction Y of the channel 151, so that the treatment medium sprayed out from the nozzle can be more fully mixed with the exhaust gases, the treatment effect on the exhaust gases is better, and the concentration of the preset gas in the exhaust gases can be reduced faster. Of course, if the spraying direction X of the nozzle is perpendicular to the run-through direction Y of the channel 151, the treatment effect of the treatment medium sprayed by the nozzle on the exhaust gases can be further improved.

In other embodiments, the switching portion 153 may alternatively be of other structures, for example, the separating member 15 is provided with a first connecting channel connecting the inner cavity 152 and the channel 151, the switching portion 153 closes the first connecting channel, and the switching portion 153 is of a thermo-sensitive material. When the temperature reaches a melting point of the switching portion 153, the switching portion 153 partially or completely melts, thereby opening the first connecting channel to connect the inner cavity 152 and the channel 151.

In some embodiments, referring to FIG. 8, FIG. 8 is a schematic structural diagram of a battery 100 provided by still other embodiments of the present application. The first space 13 and the second space 14 are separated by the separating member 15, the separating member 15 is provided with a switching mechanism 154, and the switching mechanism 154 is configured to connect or disconnect the first space 13 and the second space 14.

The switching mechanism 154 is a component that connects or disconnects the first space 13 and the second space 14. After the switching mechanism 154 is opened, the first space 13 and the second space 14 are in a connected state, and the exhaust gases discharged from the battery cell 20 into the first space 13 may enter the second space 14 through the switching mechanism 154.

There may be one or more switching mechanisms 154 on the separating member 15. For example, the separating member 15 is provided with a plurality of switching mechanisms 154, and the switching mechanisms 154 correspond to the battery cells 20 one to one.

The switching mechanism 154 disposed on the separating member 15 can connect or disconnect the first space 13 and the second space 14. In a normal working environment, the switching mechanism 154 may be in a closed state, so that the first space 13 and the second space 14 are independent of each other. When the battery cell 20 undergoes thermal runaway, the switching mechanism 154 may be in an open state, so that the first space 13 and the second space 14 are connected to each other, and the exhaust gases can enter the second space 14 from the first space 13.

In some embodiments, with reference to FIG. 8, the switching mechanism 154 is a weak portion, and the weak portion is configured to connect the first space 13 and the second space 14 after being damaged by the exhaust gases.

The weak portion is a thinner portion on the separating member 15 than other areas. The weak portion may connect the first space 13 and the second space 14 by means of rupture, detachment, melting, or the like under the action of the exhaust gases.

In this embodiment, the switching mechanism 154 can be passively opened under the action of the exhaust gases, with a simple structure and good economic efficiency.

In other implementations, the switching mechanism 154 may alternatively be of other structures, for example, the switching mechanism 154 is a switching valve disposed on the separating member 15. In an embodiment where a control unit 60 for controlling the treatment device 30 is disposed in the battery 100, the switching mechanism 154 may be electrically connected to the control unit 60, and the switching mechanism 154 may be opened or closed through the control unit 60.

In some embodiments, with reference to FIG. 8, the treatment device 30 is disposed in the second space 14.

In an embodiment where the treatment device 30 includes a receiving component 31 and a switching unit 32, the control unit 60, the detection unit 50, the receiving component 31, and the switching unit 32 may all be disposed in the second space 14.

In this embodiment, the treatment device 30 is disposed in the second space 14. After the exhaust gases enter the second space 14, the treatment device 30 can treat the exhaust gases in the second space 14, so as to reduce the concentration of the preset gas in the exhaust gases.

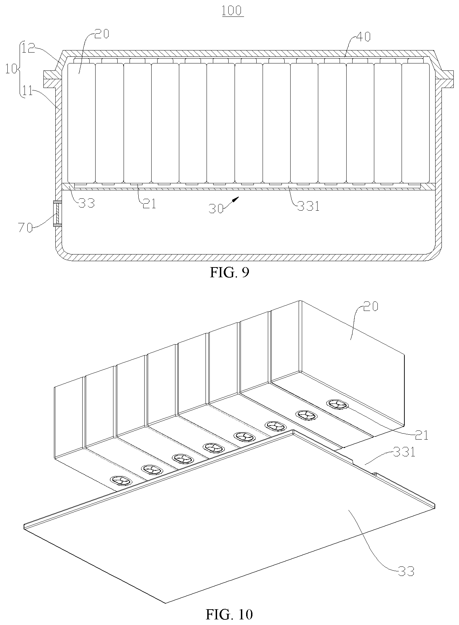

In some embodiments, referring to FIG. 9, FIG. 9 is a schematic structural diagram of a battery 100 provided by further embodiments of the present application. The battery cell 20 has a pressure relief portion 21. The treatment device 30 includes a support member 33, the support member 33 is used for supporting the battery cell 20, an avoidance cavity 331 is disposed on a side, facing the battery cell 20, of the support member 33, the avoidance cavity 331 is used for avoiding the pressure relief portion 21, and the avoidance cavity 331 accommodates the treatment medium.

The support member 33 is a component located at the bottom of the battery cell 20 to support the battery cell 20. In an embodiment where a separating member 15 is disposed inside the box 10 to separate the internal space of the box 10 into a first space 13 and a second space 14, the separating member 15 may serve as the support member 33 for supporting the battery cell 20.

The support member 33 may be of a plate-like structure, and the avoidance cavity 331 may be a groove disposed on a surface, facing the battery cell 20, of the support member 33. In an embodiment where there is a plurality of battery cells 20 in the box 10, the plurality of battery cells 20 may share one avoidance cavity 331, or one battery cell 20 may be correspondingly provided with one avoidance cavity 331. For example, in FIG. 9, the plurality of battery cells 20 share one avoidance cavity 331.

For example, the treatment medium accommodated in the avoidance cavity 331 may be a solid phase change material, an oxidant, a mixture of an oxidant and a catalyst, or the like.

In this embodiment, the avoidance cavity 331 of the support member 33 for avoiding the pressure relief portion 21 of the battery cell 20 is filled with the treatment medium, and the exhaust gases discharged from the pressure relief portion 21 can directly flow to the treatment medium, whereby the concentration of the preset gas in the exhaust gases is quickly reduced through the treatment medium.

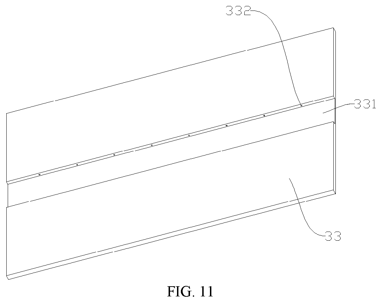

In some embodiments, referring to FIG. 10 and FIG. 11, FIG. 10 is an exploded view of a battery cell 20 and a support member 33 provided by some embodiments of the present application; and FIG. 11 is a schematic structural diagram of the support member 33 shown in FIG. 10. The battery cell 20 has a pressure relief portion 21. The treatment device 30 includes a support member 33, the support member 33 is used for supporting the battery cell 20, an avoidance cavity 331 is disposed on a side, facing the battery cell 20, of the support member 33, the avoidance cavity 331 is used for avoiding the pressure relief portion 21, a trigger mechanism 332 is disposed in the avoidance cavity 331, an accommodating cavity is disposed inside the support member 33, the accommodating cavity is used for accommodating the treatment medium, and the trigger mechanism 332 is configured to allow the treatment medium in the accommodating cavity to be discharged via the trigger mechanism 332 after triggered.

The trigger mechanism 332 may be triggered in various ways. For example, the trigger mechanism 332 is triggered by the exhaust gases discharged when the battery cell 20 undergoes thermal runaway. For another example, the trigger mechanism 332 is triggered by voltage or current of the battery cell 20. When the voltage or current of the battery cell 20 reaches a threshold, the trigger mechanism 332 is triggered.

When the battery cell 20 undergoes thermal runaway, the exhaust gases inside the battery cell 20 will be discharged into the avoidance cavity 331 through the pressure relief portion 21. Because the trigger mechanism 332 is provided with the avoidance cavity 331, the treatment medium discharged via the trigger mechanism 332 can be fully mixed with the exhaust gases in the avoidance cavity 331 after the trigger mechanism 332 is triggered, thereby quickly reducing the concentration of the preset gas in the exhaust gases.

In some embodiments, the trigger mechanism 332 is configured to be triggered by the exhaust gases.

The trigger mechanism 332 may be of various structures. For example, the support member 33 serves as the receiving component 31, the trigger mechanism 332 serves as the switching unit 32, the control unit 60 controls the trigger mechanism 332, and the trigger mechanism 332 is triggered by detecting the concentration of the preset gas through the detection unit 50. For another example, the support member 33 is provided with a second connecting channel connecting the avoidance cavity 331 and the accommodating cavity, the trigger mechanism 332 closes the second connecting channel, and the trigger mechanism 332 is of a thermo-sensitive material. When the internal temperature of the box 10 reaches a melting point of the trigger mechanism 332 due to the exhaust gases, the trigger mechanism 332 partially or completely melts, so that the treatment medium can be discharged into the avoidance cavity 331 by the trigger mechanism 332. The trigger mechanism 332 of the above structure is triggered by the exhaust gases.

In the normal working environment, the trigger mechanism 332 is not triggered, and the treatment medium accommodated in the accommodating cavity will not be discharged. When the battery cell 20 undergoes thermal runaway, the trigger mechanism 332 can be triggered by the exhaust gases discharged by the battery cell 20, so that the treatment medium is discharged in a timely manner to reduce the concentration of the preset gas in the exhaust gases.

In some embodiments, the support member 33 is configured as a thermal management component.

The thermal management component is used for accommodating a fluid to regulate the temperature of the battery cell 20. The fluid may be ultra-pure water, fluorinated liquid, water-cooled liquid, or the like. The thermal management component may be a cooling component that cools the battery cell 20, or a heating component that heats the battery cell 20. A flow channel in which the fluid flows is disposed inside the thermal management component. In an embodiment where an accommodating cavity for accommodating a treatment medium is disposed inside the support member 33, the flow channel and the accommodating cavity are independent from and not connected to each other.

In this embodiment, the support member 33 has abilities to manage the temperature of the battery cell 20 and reduce the concentration of the preset gas in the exhaust gases.

An embodiment of the present application further provides an electrical device, including the battery 100 provided by any of the foregoing embodiments. It should be noted that the embodiments in the present application and the features in the embodiments may be combined with each other on a non-conflict basis.

The above embodiments are merely used for explaining the technical solutions of the present application, rather than limiting the present application. For those skilled in the art, the present application may have various modifications and changes. Any modifications, equivalent substitutions, improvements, and the like made within the spirit and principle of the present application shall fall within the protection scope of the present application.

## Claims

1. A battery, comprising:
a box; and
at least one battery cell and a treatment device accommodated in the box, wherein the treatment device is configured for treating exhaust gases discharged from the at least one battery cell into the box, so as to adjust a concentration of a preset gas in the exhaust gases to below a corresponding preset value, wherein the preset gas is one or a mixture of combustible gases.

2. The battery according to claim 1, wherein the preset gas is electrolyte vapor, and the preset value is 3.6%.

3. The battery according to claim 1, wherein the preset gas is a mixed combustible gas of H₂, CO, and alkanes, and the preset value is 7.6%.

4. The battery according to claim 1, wherein the preset gas comprises all combustible gases in the exhaust gases, and the preset value is 8.3%.

5. The battery according to any one of claims 1-4, wherein the battery further comprises:
a detection unit disposed inside the box, wherein the detection unit is configured for detecting the concentration of the preset gas; and
a control unit electrically connected to the detection unit and the treatment device, wherein the control unit is configured for controlling the treatment device to release a treatment medium when the concentration of the preset gas is higher than the corresponding preset value.

6. The battery according to claim 5, wherein the treatment device comprises:
a receiving component in which an accommodating space is formed, wherein the accommodating space is configured for accommodating the treatment medium; and
a switching unit electrically connected to the control unit, wherein the control unit is configured for controlling the switching unit to open when the concentration of the preset gas is higher than the corresponding preset value, to release the treatment medium.

7. The battery according to claim 5 or 6, wherein the battery further comprises:
a pressure relief mechanism disposed on the box, wherein the pressure relief mechanism is electrically connected to the control unit; and
the control unit is configured for controlling the pressure relief mechanism to actuate when the concentration of the preset gas is lower than the corresponding preset value, so as to release a pressure inside the box.

8. The battery according to any one of claims 1-7, wherein the battery further comprises a pressure relief mechanism, and the pressure relief mechanism is configured for releasing a pressure inside the box after actuated; and
the box comprises a first space and a second space that are separated from each other, the first space is configured for accommodating the at least one battery cell, the second space is used for accommodating the exhaust gases, and the pressure relief mechanism is configured to connect an outside of the box and the second space after actuated.

9. The battery according to claim 8, wherein the at least one battery cell each has a pressure relief portion, and the pressure relief portion is provided facing the second space.

10. The battery according to claim 8 or 9, wherein the first space and the second space are separated by a separating member, the separating member is provided with at least one channel, and the at least one channel connects the first space and the second space.

11. The battery according to claim 10, wherein the at least one battery cell each has a pressure relief portion, and the pressure relief portion is located at one end of the corresponding channel in a run-through direction and faces the corresponding channel.

12. The battery according to claim 11, wherein the treatment device comprises the separating member, the separating member is provided with an inner cavity, the inner cavity is configured for accommodating the treatment medium, a side wall of each of the at least one channel is provided with a switching portion, and the switching portion is configured to allow the treatment medium in the inner cavity to flow out via the switching portion when opened.

13. The battery according to claim 12, wherein the switching portion is a nozzle, and a spraying direction of the nozzle intersects with the run-through direction of the corresponding channel.

14. The battery according to claim 8 or 9, wherein the first space and the second space are separated by the separating member, the separating member is provided with a switching mechanism, and the switching mechanism is configured to connect or disconnect the first space and the second space.

15. The battery according to claim 14, wherein the switching mechanism is a weak portion, and the weak portion is configured to connect the first space and the second space after being damaged by the exhaust gases.

16. The battery according to claim 8 or 9, wherein the treatment device is disposed in the second space.

17. The battery according to any one of claims 1-16, wherein the at least one battery cell has a pressure relief portion; and
the treatment device comprises a support member, the support member is configured for supporting the at least one battery cell, a side, facing the at least one battery cell, the support member is provided with at least one avoidance cavity, the at least one avoidance cavity is configured for avoiding the pressure relief portion, and the at least one avoidance cavity is configured for accommodating the treatment medium.

18. The battery according to any one of claims 1-16, wherein the battery cell has a pressure relief portion;
the treatment device comprises a support member, the support member is configured for supporting the at least one battery cell, a side, facing the at least one battery cell, the support member is provided with at least one avoidance cavity, and the at least one avoidance cavity is configured for avoiding the pressure relief portion; and
the at least one avoidance cavity is provided with a trigger mechanism, an accommodating cavity is disposed inside the support member, the accommodating cavity is configured for accommodating the treatment medium, and the trigger mechanism is configured to allow the treatment medium in the accommodating cavity to be discharged via the trigger mechanism after triggered.

19. The battery according to claim 18, wherein the trigger mechanism is configured to be triggered by the exhaust gases.

20. The battery according to any one of claims 17-19, wherein the support member is configured as a thermal management component.

21. An electrical device, comprising at least one battery each according to any one of claims 1-20.
